# EUROPEAN PATENT SPECIFICATION

(11) **EP 3 797 572 B1**
(45) Date of publication and mention of the grant of the patent: **27.09.2023**
(21) Application number: 19200189.9
(22) Date of filing: 27.09.2019
(51) Int. Cl.: A01D 17/12, A01D 17/00, B65G 17/04, A01D 17/10

(54) **ROOT CROP HARVESTER COMPRISING AN ELEVATOR FOR LIFTING ROOT CROPS**
WURZELGEMÜSEERNTEMASCHINE MIT EINEM AUFZUG ZUM HEBEN VON WURZELGEMÜSE
MOISSONNEUSE DE PLANTES RACINES COMPRENANT UN ASCENSEUR DE LEVAGE DE PLANTES RACINES

(43) Date of publication of application: 31.03.2021
(73) Proprietor: Dewulf NV, 8800 Roeselare (BE)
(72) Inventor: VAN ISEGHEM, Joeri, 8770 INGELMUNSTER (BE); DE BOE, Gert, 9080 LOCHRISTI (BE)
(74) Representative: Hostens, Veerle

(56) References cited:
- WO-A1-2019/076772
- DE-A1-102017 124 170
- US-A- 4 730 721
- US-B2- 10 039 227

## Description

This invention relates to a root crop harvester, comprising an elevator for lifting root crops, and unloading these root crops inside the root crop harvester, the elevator comprising:
- a first pair of endless carrying strips, belts or chains, arranged in parallel, which are drivable over a first closed path; and
- baskets, at least in an ascending part of the closed path arranged between the first strips, belts or chains, for receiving the root crops.

The elevator of a root crop harvester to which the present invention relates, is of a type which is suitable for lifting root crops in a root crop harvester towards a bunker in this root crop harvester, this typically by means of an intermediate discharge conveyor. Such an elevator may however also be used to lift root crops towards further conveyors in this root crop harvester, for e.g. transferring the root crops to a transfer elevator for dropping the root crops into a truck or trailer. Alternatively, these root crops can be transported to a big-bag or a box or a bag or dropped on the ground.

With such an elevator, the root crops are unloaded somewhere inside of the root crop harvester by this elevator.

An example of an elevator of a root crop harvester to which the invention relates, is e.g. known from BE 1 021 692 B1.

In US 2012/0043263 A1, embodiments of elevators of root crop harvesters to which the current invention relates, are illustrated in figures 15-17. The invention does not relate to a transfer elevator such as illustrated in figure 1 of US 2012/0043263 A1.

Another embodiment of an elevator of a harvester to which the invention relates is known from WO2019/076772A1.

A further embodiment of an elevator of root crop harvesters to which the invention relates, is distributed by Ploeger in the root crop harvesters with the names AR 3 BX and AR 4 BX and is illustrated in figures 1-2 of the present patent application.

The baskets of such an elevator can be formed by support surfaces equipped with carriers as e.g. described in BE 1 021 692 B1, or as shaped baskets as e.g. described in US 2012/0043263 A1, or as pockets made of flexible support elements as e.g. in the root crop harvesters with the names AR 3 BX and AR 4 BX or as combinations of these baskets, like the combinations described and illustrated in WO2019/076772A1.

More specifically, this invention concerns a potato harvester. However, a harvester according to this invention can also be used for the harvesting of other root crops such as tubers or roots, etc.

Such harvesters can range from machines towed by a tractor or carried on a tractor to self-propelled vehicles.

Such a harvester comprises a crop-digger section, which typically comprises one or more harvesting shares for the harvesting of root crops. A sieving unit, comprising transport and/or cleaning devices is placed downstream of these harvesting shares and upstream of such an elevator, in order to transport the root crops and, in the meantime, to sieve the dirt from the harvested root crops. Dirt to be sieved includes typically foliage, stones, earth residues, etc.

The elevator of a root crop harvester to which this invention relates, is the bottleneck inside such harvester with regard to achieving the desired capacity. The crop-digger section (e.g. harvesting shares) is preferably positioned over the entire width of the harvester, but the harvested volume can then not efficiently be transferred to the elevator.

At first sight, it seems easily possible to adapt the depth of the elevator (or in other words, the distance between the carrying strips and the corresponding volume of the baskets). However, then an additional spreading device is typically required between said sieving unit and to distribute the root crops over the full depth of the elevator.

Such a spreading device however has a considerable weight. Known spreading devices can have a weight of around 400 kg. When increasing the capacity of such a root crop harvester, such an additional weight is to be avoided. For 3-axle agricultural vehicles in road traffic, the weight of the machine must be limited to a maximum of 26 tons in unloaded condition, in order to be approved for use in Belgium. In addition, the weight on each driven axle in unloaded condition is to be limited to maximally 11,5 tons.

An alternative solution could be found in accelerating the elevator. This is however impossible without compromising the quality of the root crops.

A root crop harvester providing a working and a travel position is disclosed in document US 10039227 B2.

It is an object of the present invention to provide an alternative solution to increase the capacity of such a root crop harvester.

This object is achieved by providing a root crop harvester, comprising an elevator for lifting root crops and unloading these root crops inside the root crop harvester, the elevator comprising:
- a first pair of endless carrying strips, belts or chains, arranged in parallel, which are drivable over a first closed path;
- baskets, at least in an ascending part of the closed path arranged between the first strips, belts or chains, for receiving the root crops;
- at least two deflection rollers, onto which the first strips, belts or chains are arranged, which define the said ascending part or which define a descending part of the closed path;
- a fixed frame and a moveable frame to which the said deflection rollers are rotatably fixed, which moveable frame is moveable in a horizontal direction with respect to the fixed frame;
   such that the elevator is deformable between
- a working position;
- and a travel position in which in at least the ascending part or the descending part of the path, the first strips, belts or chains are moved in a horizontal direction with respect to the working position, such that the width of the elevator is reduced.

The width of the elevator is reduced in the travel position and can then be carried out as the maximum width of the root crop harvester for travelling on roads. In the working position, the elevator will thus extend outside the width of the root crop harvester for travelling on roads. The corresponding dimension (width) of the baskets can be correspondingly increased with respect to baskets of such elevators of the prior art, such that a higher volume of root crops can be lifted.

With the same length (depth) of the elevator, a higher capacity is thus possible.

In root crop harvesters where in the prior art a spreading device was required, the length (depth) of the elevator can actually be narrowed down to eliminate the spreading device for a same capacity. Such root crop harvester will thus have less weight. Such root crop harvester can also be made shorter in length, so that it is more agile.

In a specific embodiment, in the working position, the baskets are folded out for receiving root crops and in the travel position, the baskets are folded up, reducing the width thereof.

In such embodiments, a sieving unit, comprising transport and/or cleaning devices, placed downstream of the harvesting shares and upstream of such an elevator can take almost the full width of the root crop harvester next to or in a gap of the elevator, such sieving unit can thus be made wider than in the prior art. The width of the baskets positioned on one or both sides of the elevator can be used to reduce the corresponding width of the elevator.

The harvesting shares are typically positioned over the entire width of the harvester. In the prior art, when shares are arranged across a certain width, the sieving unit may firstly connect to the full width of the harvesting shares, but downstream various narrowing in the sieving path must be provided, in order to be able to load the root crops onto the elevator. Such narrowing inevitably leads to dirt accumulation in the machine, which is undesired. By making the elevator wider, said narrowing can be avoided.

In a preferred embodiment, the elevator comprises side limiters, which are arranged at least at the level of the ascending part on either side of the baskets to prevent that root crops fall out of the baskets via these sides.

Such side limiters may be provided per basket and can then e.g. be attached to the strips, belts or chains, or on a support surface of the baskets. Such side limiters are also known as active side walls. These side limiters move at the same speed as the baskets so that there is less friction between the root crops and the side limiters.

Alternatively, such side limiters can extend over more than one basket and are then preferably arranged next to said ascending part, preferably over the full height of this ascending part, the strips, belts or chains and the baskets are moving with respect to the side limiters, when the strips, belts or chains are driven over said closed path.

If in such an embodiment with side limiters, in the travel position, the first strips, belts or chains are moved in the ascending part, then the side limiters are preferably correspondingly reduced in said horizontal direction.

Such side limiters can more specifically be designed as side walls. Such side walls may occupy a limited space to the side of the elevator.

Even more specifically, the side limiters then preferably comprise on either side of the baskets at least a first side wall part and a second side wall part, which second side wall part is moveable in said horizontal direction with respect to the first side wall part, such that in the travel position, these side wall parts essentially overlap each other. Such side walls can comprise two or more such side wall parts.

Such side wall parts may also be arranged telescopically with respect to each other.

Such side walls and such side wall parts may more specifically be designed as panels.

In order to reduce wear of such first side wall part and such second side wall part, wear parts may be implemented between these wall parts.

Instead of carrying out the side limiters with said side wall parts, on each side of the baskets, a single sidewall (panel) could be hingedly arranged around a vertically arranged pivotal axis. In the travel position this single side wall could then be hinged with respect to its position in the working position of the elevator in order to reduce its width (dimension perpendicular to the travel direction of the root crop harvester). Alternatively, the side limiters, could e.g. be made flexible this e.g. of tarpaulin or cloth or rubber. Side limiters could furthermore be made foldable or pliable (e.g. accordion-like).

Furthermore alternatively, parallel bars or strips could be arranged next to the baskets at a distance from each other in order to form together side limiters, with these bars or strips being moveable with respect to each other and being placed further apart in the working position than in the travel position, where they possibly might even overlap. In the working position the distance is then however so that root crops cannot fall between adjacent bars or strips.

In embodiments wherein the elevator comprises side limiters with a said first wall part and a said second wall part, the second side wall part is preferably fixed to the moveable frame.

In order to arrange such a moveable frame moveable with respect to such a fixed frame, a corresponding elevator preferably comprises frame driving means for driving the movement of the moveable frame.

Such frame driving means may advantageously comprise a hydraulic cylinder.

In order further to arrange such a moveable frame moveable with respect to such a fixed frame, such a moveable frame is preferably suspended to the fixed frame by means of two hinged arms. Such hinged arms provide for an easy implementation of the suspension of the moveable frame in an elevator.

More specifically, when such moveable frame is suspended to the fixed frame by means of two hinged arms and is driveable by means of driving means with a said hydraulic cylinder, a first hinged arm of the two hinged arms may then preferably at its first end be hingedly attached to a first end of the hydraulic cylinder in a first hinge point, at its second end be hingedly attached to the moveable frame in a second hinge point and between its first end and its second end be hingedly attached to the fixed frame in a third hinge point, the second hinged arm of the two hinged arms may then preferably at its first end be hingedly attached to the fixed frame in a fourth hinge point and at its second end be hingedly attached to the moveable frame in a fifth hinge point and the hydraulic cylinder may then preferably at its second end be hingedly attached to the moveable frame in a sixth hinge point.

In a more secure embodiment, an elevator of a harvester according to the invention furthermore comprises driving means for driving the strips, belts, chains, and a first sensor for detecting the working position of the elevator, which first sensor is linked to the elevator driving means and wherein the elevator driving means are configured so that the strips, belts or chains are only drivable by the elevator driving means when the sensor detects the working position.

In a further optimized embodiment, an elevator of a harvester according to the invention comprises a second sensor for detecting the load of root crops on the elevator, which second sensor is linked to the elevator driving means and wherein the elevator driving means are configured for driving the strips, belts or chains with an adjustable driving speed, and for adjusting this driving speed in function of the load measured with the second sensor.

There are different possibilities for adjusting the driving speed of the ring elevator automatically, using a second sensor.

A first option is via a second sensor, which measures the layer thickness of the amount of root crops on the flexible support elements. The thicker, the more potatoes, the faster the strips, belts or chains are driven.

A second option is using an alternative second sensor, which measures the pressure on the driving means. A fuller ring elevator will lead to more pressure on the driving means. The more pressure detected, the faster the strips, belts or chains are driven.

A particularly preferred embodiment of an elevator of a harvester according to the invention comprises:
- a second pair of endless carrying strips, belts or chains, arranged in parallel, which are drivable over a second closed path;
- first parallel transverse elements attached between and to the first strips, belts or chains;
- second parallel transverse elements attached between and to the second strips, belts or chains; and
- flexible support elements, each attached to a first transverse element and to a second transverse element;
the first strips, belts or chains being arranged around the second strips, belts or chains at a distance, which, when in use, varies along the paths between a minimum distance and a maximum distance and in an ascending part of the paths equals a carrier distance, such that the flexible carrier elements form said baskets for receiving the root crops.

In such an embodiment, root crops are less prone to damage, such that quality and efficiency is increased.

The first strips, belts or chains are arranged around the second strips, belts or chains in a sense that the first closed path is wider than the second closed path in the horizontal direction. The distance between the first strips, belts or chains can be chosen larger (such that the first strips, belts or chains are placed on both sides of the second strips, belts, chains or the like), equal or smaller than the distance between the second strips, belts or chains (such that the second strips, belts or chains are placed on both sides of the first strips, belts or chains).

More specifically, an elevator of a harvester according to the invention is preferably designed as a ring elevator.

In a preferred embodiment of such a root crop harvester, the elevator is configured as a ring elevator and a feeding conveyor of this root crop harvester, for feeding the root crops towards the ring elevator is installed through the ring elevator.

This feeding conveyor can be part of the said sieving unit, but preferably does not have a sieve function when passing through the ring elevator.

In such an embodiment, the first strips, belts or chains are preferably moveable towards and away from said feeding conveyor in order to provide them moveable according to the invention.

The present invention will now be explained in more detail by means of the following detailed description of a harvester according to the present invention. The sole aim of this description is to give explanatory examples and to indicate further advantages and particulars of the present invention, and can thus by no means be interpreted as a limitation of the area of application of the invention or of the patent rights defined in the claims.

In this detailed description, reference numerals are used to refer to the attached drawings, in which in:
- Fig. 1 an example of a ring elevator of the state of the art is illustrated in perspective;
- Fig. 2 the ring elevator of figure 1 is illustrated in back view;
- Fig. 3 parts of a root crop harvester, comprising a ring elevator according to the invention are schematically illustrated in perspective;
- Fig. 4 a part of the ring elevator of the root crop harvester of figure 3 is illustrated in more detail at the height of the ascending part thereof, without the flexible support elements, in working position and in perspective view;
- Fig. 5 the part of the ring elevator of figure 4 is illustrated in travel position and in perspective view;
- Fig. 6 a larger part of the ring elevator of the root crop harvester of figure 3 is illustrated in more detail at the height of the ascending part thereof, without the fixed frame and the first side wall part, in working position and in back view;
- Fig. 7 the part of the ring elevator of figure 6 is illustrated in travel position and in back view;
- Fig. 8 a part of the ring elevator of the root crop harvester of figure 3 is illustrated in more detail at the height of the ascending part thereof, at the height of one of the side limiters thereof, in working position and in cross section;
- Fig. 9 the part of the ring elevator of figure 8 is illustrated in travel position and in cross section.

In this application, the length of the elevator (2) is the dimension of the elevator (2) in the length or travel direction (Y) of the root crop harvester (1) in which it is installed, the width of the elevator (2) is the dimension of this elevator (2) in a horizontal direction (X) perpendicular to this travel direction (Y) of the root crop harvester (1) in which it is installed and the height of the elevator (2) is the dimension of this elevator (2) in a vertical direction (Z) of the root crop harvester (1) in which it is installed.

The illustrated elevators (2) are ring elevators. For a skilled person, it will be clear how to apply the teaching thereof in other types of elevators, suitable for lifting root crops in a root crop harvester (1) towards a bunker.

It is also conceivable for a skilled person to adapt the teaching of the illustrated embodiment mutatis mutandis to alternative types of such elevators (2), such as e.g. described in BE 1 021 692 B1 or US 2012/0043263 A1 (figures 15-17 thereof) or further alternatives thereof.

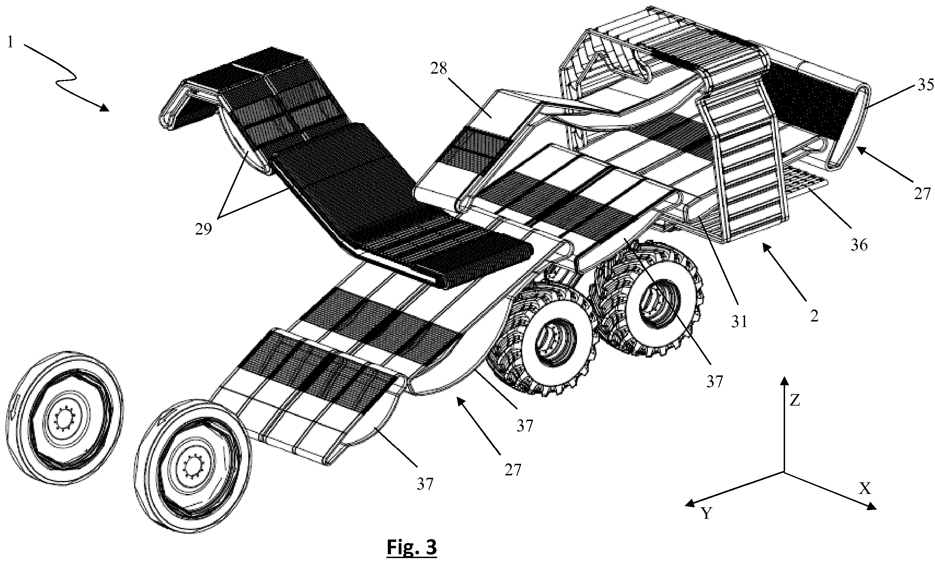

Figure 3 illustrates a possible position of such a ring elevator (2) in a root crop harvester (1). Such a root crop harvester (1) comprises a crop-digger section with e.g. one or more harvesting shares, which are not illustrated. A sieving unit (27), comprises sieving conveyors (37), a feeding conveyor (31), a pintle belt (35) and axial rollers (36). This sieving unit (27) is positioned upstream of the harvesting shares for transporting root crops towards the ring elevator (2) and in the meantime, to sieve dirt from the harvested root crops. With the elevator (2), the root crops are then lifted towards a discharge conveyor (28) onto a transfer elevator (29).

Other configurations are of course conceivable wherein e.g. the root crop harvester (1) is provided with a bunker instead of a transfer elevator (29) and/or without axial rollers (36), and/or without pintle belt (35) and/or with the ring elevator (2) being positioned fully at the back of the root crop harvester (1), and/or with additional or less conveyors (28, 29, 31, 34, 37) and/or other transfer means etc.

The parts of the harvester machine (1) besides the ring elevator (2) can be of any known design.

With a ring elevator (2) according to the prior art it is not feasible to have a harvester machine (1) with a crop-digger section extending over the maximum width of the harvester machine (1) and a similar sieving unit (27) extending over the same width, with a feeding conveyor (31) thereof extending over this same width, being inserted through the ring elevator (2).

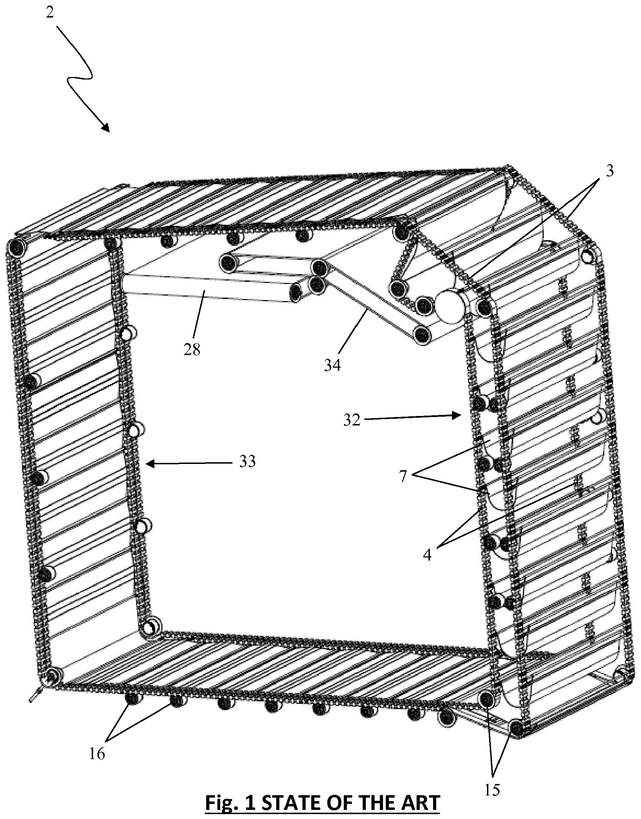

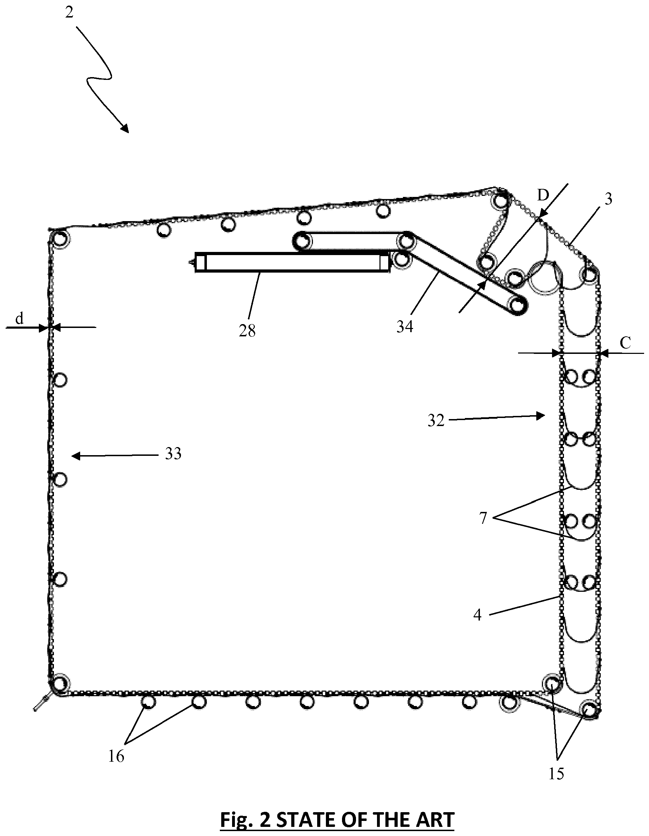

In figures 1 and 2 a ring elevator (2) of the prior art is illustrated.

Both this ring elevator (2) of the prior art and the illustrated embodiment of a ring elevator (2) according to the invention (figures 3-9) comprise:
- a first pair of endless carrying strips (3), belts or chains, arranged in parallel, which are drivable over a first closed path;
- a second pair of endless carrying strips (4), belts or chains, arranged in parallel, which are drivable over a second closed path;
- first parallel transverse elements (5) attached between and to the first strips (3), belts or chains; and
- second parallel transverse elements (6) attached between and to the second strips (4), belts or chains.

The closed paths are defined by deflection rollers (15) and carrying rollers (16) onto which the strips (3, 4) are arranged and pass while being driven.

The transverse elements (5, 6) may include bars and/or slats and/or profiles and/or tubes and can be made of metal or plastic. If necessary, they can be provided with a cover. In addition, they can also be provided with one or more indentations.

It is preferable to use transverse bars (5, 6) that are riveted to the strips (3, 4), belts or chains, as this provides a strong connection.

Flexible support elements (7) are each attached to a first transverse element (5) and to a second transverse element (6).

These flexible support elements (7) may e.g. made of plastic. These may be attached to the transverse elements (5, 6) as in the prior art, or as described in BE 2019/5181. Although an elevator (2) to which the invention relates does not have a sieving function, it is possible to provide such flexible support elements (7) with perforations, this primarily in order to reduce weight of the ring elevator (2).

In the elevator (2) according to the state of the art, additional transverse elements (5, 6) are provided, to which no flexible support elements (7) are attached. This is also possible with elevators (2) according to the invention. In order to reduce the weight of the ring elevator (2), it is however preferable, not to have such additional transverse elements (5, 6), this as in the illustrated elevator (2) according to the invention.

The first strips (3), belts or chains are arranged around the second strips (4), belts or chains in such a way that the flexible support elements (7) form baskets for the transport of the root crops in an ascending part (32) of their path and are stretched out to save space in a descending part (33) of their path, where the root crops do not have to be transported. The strips (3, 4) are therefore positioned at a distance, which, when in use, varies along the paths between a minimum distance (d) and a maximum distance (D). In an ascending part (32) of the paths, the distance between the strips (3, 4), belts or chains, equals a carrier distance (C), for forming the baskets (7) for receiving the root crops. This carrier distance (C) is a distance between the minimum distance (d) and the maximum distance (D). In a descending part (33) of the paths, the distance between the strips (3, 4), belts or chains equals said minimum distance (d).

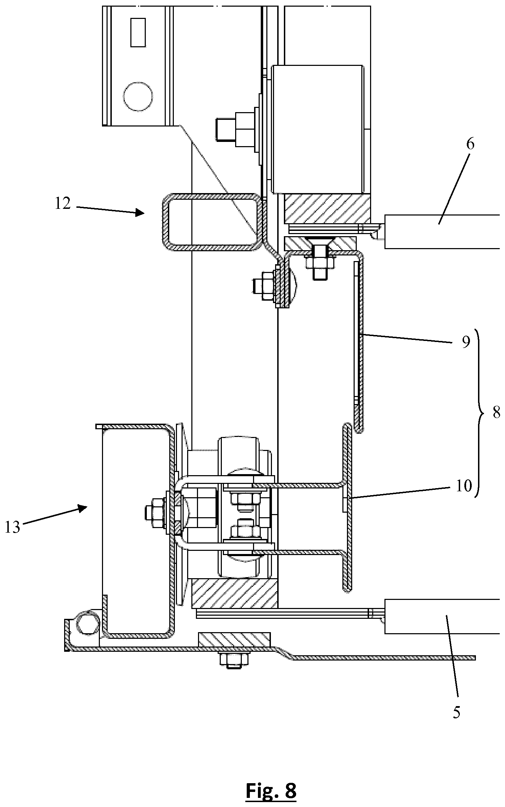

In the illustrated embodiment, the first closed path is wider than the second closed path, seen in the horizontal direction (X). The distance between the first strips (3), belts or chains is larger than the distance between the second strips (4), belts or chains (see figure 8). The first strips (3), belts or chains are thus placed on both sides of the second strips (4), belts or chains. It is however also possible to position the first strips (3), belts or chains at a smaller distance than the second strips (4), belts or chains, such that the second strips (4), belts or chains are placed on both sides of the first strips (3), belts or chains.

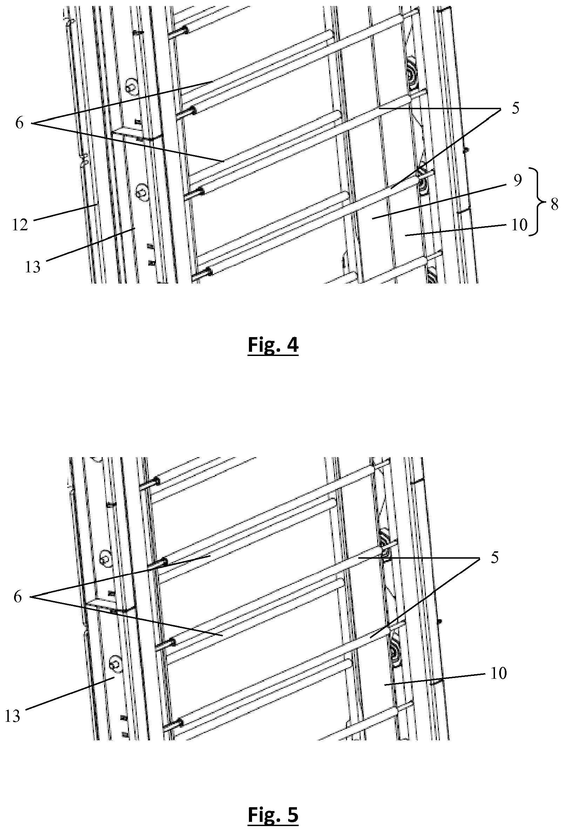

According to the invention, the illustrated elevator (2) is now deformable between a working position (as illustrated in figures 3, 4, 6 and 8) and a travel position (as illustrated in figures 5, 7 and 9). In this respect, in the ascending part (32), the first strips (3), belts or chains are moveable in a horizontal direction (X), perpendicular to the travel direction (Y) of the root crop harvester (1). In the travel position, the width of the elevator (2) is reduced with respect to the working position. The width of the root crop harvester (1) is correspondingly reduced.

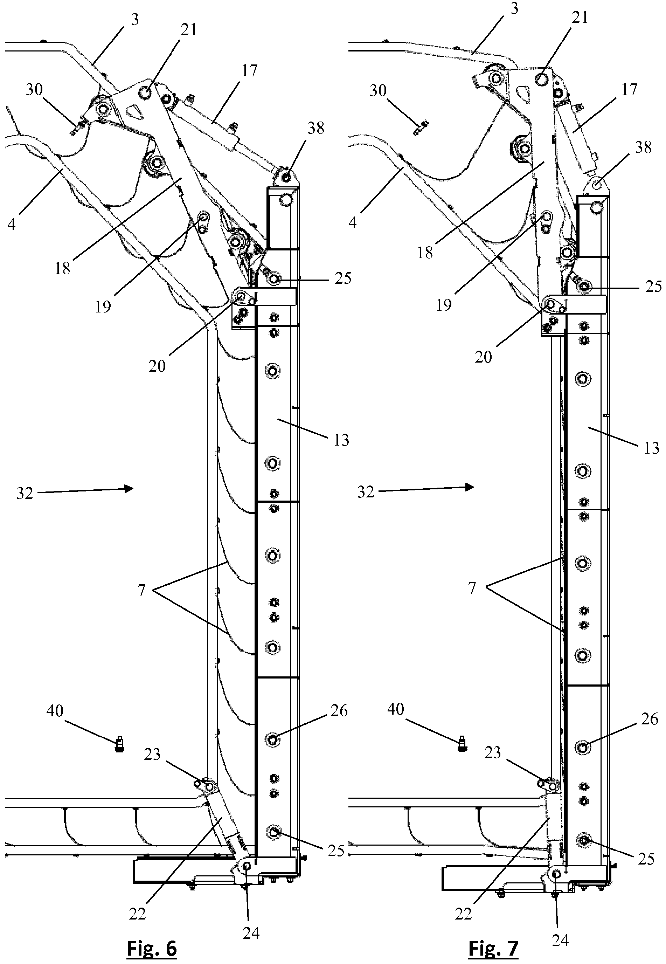

In the working position, the baskets (7) are folded out for receiving root crops (see fig. 6). In the travel position, the baskets (7) are folded up, reducing the width of the baskets (7) (see fig. 7).

In order to move these first strips (3), belts or chains, the elevator (2) comprises a fixed frame (12) and a moveable frame (13), which moveable frame (13) is moveable in said horizontal direction (X) with respect to the fixed frame (12). The deflection rollers (15), and intermediate carrying rollers (16), defining the ascending part (32) of the first closed path, are rotatably fixed to the moveable frame (13) with shafts (25), respectively (26), which are moveable together with the moveable frame (13), whereas the shafts of the other deflection rollers (15) and carrying rollers (16) have a fixed position in the elevator (2).

In the illustrated embodiment of an elevator (2) according to the invention, the moveable frame (13) is suspended to the fixed frame (12) by means of two hinged arms (18, 22).

This illustrated elevator (2) is provided with driving means (17) for driving the movement of the moveable frame (13). It is alternatively also possible e.g. to arrange such a moveable frame (13) manually moveable.

The driving means (17) comprise a hydraulic cylinder (17). A first hinged arm (18) of the two hinged arms (18, 22) is at its first end hingedly attached to a first end of the hydraulic cylinder (17) in a first hinge point (21), is at its second end hingedly attached to the moveable frame (13) in a second hinge point (20) and is between its first end and its second end hingedly attached to the fixed frame (12) in a third hinge point (19). A second hinged arm (22) of the two hinged arms (18, 22) is at its first end hingedly attached to the fixed frame (12) in a fourth hinge point (23) and is at its second end hingedly attached to the moveable frame (13) in a fifth hinge point (24). The hydraulic cylinder (17) is at its second end hingedly attached to the moveable frame (13) in a sixth hinge point (38).

The illustrated embodiment of an elevator (2) according to the invention is furthermore provided with side limiters (8), which are arranged at the level of the ascending part (32) on either side of the baskets (7) to prevent that root crops fall out of the baskets (7) via these sides.

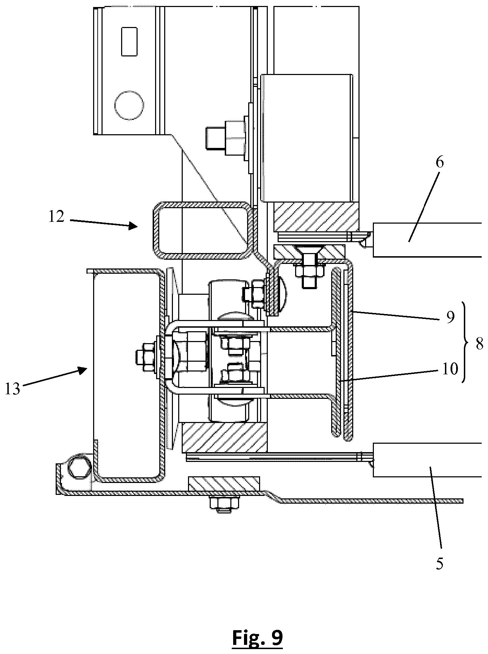

These side limiters (8) comprise a first side wall part (9) and a second side wall part (10), which second side wall part (10) is moveable in said horizontal direction (X) with respect to the first side wall part (9), such that in the travel position, these side wall parts (9, 10) essentially overlap each other (see figure 9). In order to move said second side wall part (10) with respect to said first side wall part (9), the second side wall part (10) is fixed to the moveable frame (13). The width of the side limiters (8) is thus automatically correspondingly reduced when moving the first strips (3), belts or chains in said horizontal direction (X) towards the travel position.

Alternatives for the illustrated side limiters (8) have been mentioned above.

In addition, the illustrated embodiment of an elevator (2) according to the invention is provided with a first sensor (30) for detecting the working position of the elevator (2). This first sensor (30) is linked to the elevator driving means and these elevator driving means are configured so that the strips (3), belts or chains are only drivable by the elevator driving means when the sensor (30) detects the working position.

Furthermore, a second sensor (40) for detecting the load of root crops on the elevator (2) is provided. This second sensor (40) is also linked to the elevator driving means. These elevator driving means are configured for driving the strips (3, 4), belts or chains with an adjustable driving speed, and for adjusting this driving speed in function of the load measured with the second sensor (40).

There are 2 possibilities for adjusting the driving speed of the ring elevator (2) automatically, using a second sensor (40). The first option is via a second sensor (40) as illustrated, which measures the layer thickness of the amount of root crops on the flexible support elements (7). The thicker, the more potatoes, the faster the strips (3), belts or chains are driven. The second option is using an alternative second sensor, which measures the pressure on the driving means. A fuller ring elevator (2) will lead to more pressure on the driving means. The more pressure detected, the faster the strips (3), belts or chains are driven.

In the illustrated embodiment, the first strips (3), belts or chains are moveable in said horizontal direction (X) and this in the ascending part (32).

Alternatively, it is also possible to provide both the first strips (3), belts or chains and the second strips (4), belts or chains moveable in said horizontal direction.

Furthermore it is alternatively or additionally possible to provide the first strips (3), belts or chains and possibly also the second strips (4), belts or chains moveable in the descending part (33) of the elevator (2).

## Claims

1. Root crop harvester (1), comprising an elevator (2) for lifting root crops and unloading these root crops inside the root crop harvester (1), the elevator (2) comprising:
- a first pair of endless carrying strips (3), belts or chains, arranged in parallel, which are drivable over a first closed path;
- baskets (7), at least in an ascending part (32) of the closed path arranged between the first strips (3), belts or chains, for receiving the root crops; and
- at least two deflection rollers (15), onto which the first strips (5), belts, chains are arranged, which define the said ascending part (32) or which define a descending part (33) of the closed path;
**characterized in that** the elevator (2) comprises a fixed frame (12) and a moveable frame (13) to which the said deflection rollers (15) are rotatably fixed, which moveable frame (13) is moveable in a horizontal direction (X) with respect to the fixed frame (12), such that that the elevator (2) is deformable between
- a working position;
- and a travel position in which in at least the ascending part (32) or the descending part (33) of the path, the first strips (3), belts or chains are moved in the horizontal direction (X) with respect to the working position, such that the width of the elevator (2) is reduced.

2. Root crop harvester (1) according to claim 1, **characterized in that** in the working position, the baskets (7) are folded out for receiving root crops and that in the travel position, the baskets (7) are folded up, reducing the width thereof.

3. Root crop harvester (1) according to any of the preceding claims, **characterized in that** the elevator (2) comprises side limiters (8), which are arranged at least at the level of the ascending part (32) on either side of the baskets (7) to prevent that root crops fall out of the baskets (7) via these sides and that in the travel position, the first strips (3), belts, chains of the like are moved in the ascending part (32) and the side limiters (8) are correspondingly reduced in said horizontal direction (X).

4. Root crop harvester (1) according to claim 3, **characterized in that** the side limiters (8) are designed as side walls.

5. Root crop harvester (1) according to claim 4, **characterized in that** on either side of the baskets (7) the side limiters (8) comprise at least a first side wall part (9) and a second side wall part (10), which second side wall part (10) is moveable in said horizontal direction (X) with respect to the first side wall part (9), such that in the travel position, these side wall parts (9, 10) essentially overlap each other.

6. Root crop harvester (1) according to claim 5, **characterized in that** the second side wall part (10) is fixed to the moveable frame (13).

7. Root crop harvester (1) according to any of the preceding claims, **characterized in that** the elevator (2) comprises frame driving means (17) for driving the movement of the moveable frame (13).

8. Root crop harvester (1) according to any of the preceding claims, **characterized in that** the moveable frame (13) is suspended to the fixed frame (12) by means of two hinged arms (18, 22).

9. Root crop harvester (1) according to claim 8, **characterized in that** the frame driving means (17) comprise a hydraulic cylinder (17) and that a first hinged arm (18) of the two hinged arms (18, 22) is at its first end hingedly attached to a first end of the hydraulic cylinder (17) in a first hinge point (21), is at its second end hingedly attached to the moveable frame (13) in a second hinge point (20) and is between its first end and its second end hingedly attached to the fixed frame (12) in a third hinge point (19), that a second hinged arm (22) of the two hinged arms (18, 22) is at its first end hingedly attached to the fixed frame (12) in a fourth hinge point (23) and is at its second end hingedly attached to the moveable frame (13) in a fifth hinge point (24) and that the hydraulic cylinder (17) is at its second end hingedly attached to the moveable frame (13) in a sixth hinge point (38).

10. Root crop harvester (1) according to any of the preceding claims, **characterized in that** the elevator (2) comprises elevator driving means for driving the strips (3), belts or chains, **in that** the elevator (2) comprises a first sensor (30) for detecting the working position of the elevator (2), **in that** the first sensor (30) is linked to the elevator driving means and **in that** the elevator driving means are configured so that the strips (3, 4), belts or chains are only drivable by the elevator driving means when the sensor (30) detects the working position.

11. Root crop harvester (1) according to claim 10, **characterized in that** the elevator (2) comprises a second sensor (40) for detecting the load of root crops on the elevator (2) and that the second sensor (40) is linked to the elevator driving means and **in that** the elevator driving means are configured for driving the strips (3, 4), belts or chains with an adjustable driving speed, and for adjusting this driving speed in function of the load measured with the second sensor (40).

12. Root crop harvester (1) according to one of the preceding claims, **characterized in that** the elevator (2) further comprises:
- a second pair of endless carrying strips (4), belts or chains, arranged in parallel, which are drivable over a second closed path;
- first parallel transverse elements (5) attached between and to the first strips (3), belts or chains;
- second parallel transverse elements (6) attached between and to the second strips (4), belts or chains;
- flexible support elements (7), each attached to a first transverse element (5) and to a second transverse element (6);
the first strips (3), belts or chains being arranged around the second strips (4), belts or chains at a distance, which, when in use, varies along the paths between a minimum distance (d) and a maximum distance (D) and in an ascending part (32) of the paths equals a carrier distance (C), such that the flexible support elements (7) form said baskets (7) for receiving the root crops.

13. Root crop harvester (1) according to one of the preceding claims, **characterized in that** the elevator (2) is configured as a ring elevator (2) and that a feeding conveyor (31) for feeding the root crops towards the ring elevator (2) is installed through the ring elevator (2).

## Patentansprüche

1. Wurzelfruchterntemaschine (1), umfassend einen Höhenförderer (2) zum Anheben von Wurzelfrüchten und Entladen der Wurzelfrüchte in die Wurzelfruchterntemaschine (1), wobei der Höhenförderer (2) Folgendes umfasst:
- ein erstes Paar von parallel angeordneten Endlostragebändern (3), -gurten oder -ketten, die über einen ersten geschlossenen Pfad antreibbar sind;
- Körbe (7), die zumindest in einem aufsteigenden Teil (32) des geschlossenen Pfads zwischen den ersten Bändern (3), Gurten oder Ketten angeordnet sind, zum Aufnehmen der Wurzelfrüchte; und
- mindestens zwei Ablenkrollen (15), auf denen die ersten Bänder (5), Gurte, Ketten angeordnet sind, die den aufsteigenden Teil (32) bilden oder die einen absteigenden Teil (33) des geschlossenen Pfads definieren;
**dadurch gekennzeichnet, dass** der Höhenförderer (2) einen feststehenden Rahmen (12) und einen beweglichen Rahmen (13) umfasst, an dem die Ablenkrollen (15) drehbar befestigt sind, wobei der bewegliche Rahmen (13) in einer horizontalen Richtung (X) in Bezug auf den feststehenden Rahmen (12) derart beweglich ist, dass der Höhenförderer (2) zwischen Folgendem verformbar ist
- einer Arbeitsposition;
- und einer Verfahrposition, in der in mindestens dem aufsteigenden Teil (32) oder dem absteigenden Teil (33) des Pfads die ersten Bänder (3), Gurte oder Ketten in der horizontalen Richtung (X) in Bezug auf die Arbeitsposition derart bewegt werden, dass die Breite des Höhenförderers (2) reduziert ist.

2. Wurzelfruchterntemaschine (1) nach Anspruch 1, **dadurch gekennzeichnet, dass** in der Arbeitsposition die Körbe (7) zum Aufnehmen von Wurzelfrüchten ausgeklappt sind, und dass in der Verfahrposition die Körbe (7) eingeklappt sind, was die Breite davon reduziert.

3. Wurzelfruchterntemaschine (1) nach einem der vorhergehenden Ansprüche, **dadurch gekennzeichnet, dass** der Höhenförderer (2) Seitenbegrenzer (8) umfasst, die mindestens auf der Ebene des aufsteigenden Teils (32) auf jeder Seite der Körbe (7) angeordnet sind, um zu verhindern, dass Wurzelfrüchte aus den Körben (7) über die Seiten herausfallen, und dass in der Verfahrposition die ersten Bänder (3), Gurte, Ketten oder dergleichen in dem aufsteigenden Teil (32) bewegt werden und die Seitenbegrenzer (8) dementsprechend in der horizontalen Richtung (X) reduziert sind.

4. Wurzelfruchterntemaschine (1) nach Anspruch 3, **dadurch gekennzeichnet, dass** die Seitenbegrenzer (8) als Seitenwände ausgestaltet sind.

5. Wurzelfruchterntemaschine (1) nach Anspruch 4, **dadurch gekennzeichnet, dass** auf jeder Seite der Körbe (7) die Seitenbegrenzer (8) mindestens einen ersten Seitenwandteil (9) und einen zweiten Seitenwandteil (10) umfassen, wobei der zweite Seitenwandteil (10) in der horizontalen Richtung (X) in Bezug auf den ersten Seitenwandteil (9) derart beweglich ist, dass in der Verfahrposition die Seitenwandteile (9, 10) im Wesentlichen einander überlagern.

6. Wurzelfruchterntemaschine (1) nach Anspruch 5, **dadurch gekennzeichnet, dass** der zweite Seitenwandteil (10) an dem beweglichen Rahmen (13) befestigt ist.

7. Wurzelfruchterntemaschine (1) nach einem der vorhergehenden Ansprüche, **dadurch gekennzeichnet, dass** der Höhenförderer (2) Rahmenantriebsmittel (17) zum Antreiben der Bewegung des beweglichen Rahmens (13) umfasst.

8. Wurzelfruchterntemaschine (1) nach einem der vorhergehenden Ansprüche, **dadurch gekennzeichnet, dass** der bewegliche Rahmen (13) an dem feststehenden Rahmen (12) mittels zweier Gelenkarme (18, 22) aufgehängt ist.

9. Wurzelfruchterntemaschine (1) nach Anspruch 8, **dadurch gekennzeichnet, dass** die Rahmenantriebsmittel (17) einen Hydraulikzylinder (17) umfassen und dass ein erster Gelenkarm (18) der zwei Gelenkarme (18, 22) an seinem ersten Ende gelenkig an einem ersten Ende des Hydraulikzylinders (17) in einem ersten Gelenkpunkt (21) angebracht ist, an seinem zweiten Ende gelenkig an dem beweglichen Rahmen (13) in einem zweiten Gelenkpunkt (20) angebracht ist und zwischen seinem ersten Ende und seinem zweiten Ende gelenkig an dem feststehenden Rahmen (12) in einem dritten Gelenkpunkt (19) angebracht ist, dass ein zweiter Gelenkarm (22) der zwei Gelenkarme (18, 22) an seinem ersten Ende gelenkig an dem feststehenden Rahmen (12) in einem vierten Gelenkpunkt (23) angebracht ist und an seinem zweiten Ende gelenkig an dem beweglichen Rahmen (13) in einem fünften Gelenkpunkt (24) angebracht ist und dass der Hydraulikzylinder (17) an seinem zweiten Ende gelenkig an dem beweglichen Rahmen (13) in einem sechsten Gelenkpunkt (38) angebracht ist.

10. Wurzelfruchterntemaschine (1) nach einem der vorhergehenden Ansprüche, **dadurch gekennzeichnet, dass** der Höhenförderer (2) Höhenfördererantriebsmittel zum Antreiben der Bänder (3), Gurte oder Ketten umfasst, dadurch, dass der Höhenförderer (2) einen ersten Sensor (30) zum Detektieren der Arbeitsposition des Höhenförderers (2) umfasst, dadurch dass der erste Sensor (30) mit den Höhenfördererantriebsmitteln verbunden ist, und dadurch, dass die Höhenfördererantriebsmittel derart ausgebildet sind, dass die Bänder (3, 4), Gurte oder Ketten nur durch die Höhenfördererantriebsmittel antreibbar sind, wenn der Sensor (30) die Arbeitsposition detektiert.

11. Wurzelfruchterntemaschine (1) nach Anspruch 10, **dadurch gekennzeichnet, dass** der Höhenförderer (2) einen zweiten Sensor (40) zum Detektieren der Last von Wurzelfrüchten auf dem Höhenförderer (2) umfasst und dass der zweite Sensor (40) mit den Höhenfördererantriebsmitteln verbunden ist, und dadurch, dass die Höhenfördererantriebsmittel zum Antreiben der Bänder (3, 4), Gurte oder Ketten mit einer anpassbaren Antriebsgeschwindigkeit und zum Anpassen der Antriebsgeschwindigkeit in Abhängigkeit von der mit dem zweiten Sensor (40) gemessenen Last ausgebildet sind.

12. Wurzelfruchterntemaschine (1) nach einem der vorhergehenden Ansprüche, **dadurch gekennzeichnet, dass** der Höhenförderer (2) ferner Folgendes umfasst:
- ein zweites Paar von parallel angeordneten Endlostragebändern (4), -gurten oder -ketten, die über einen zweiten geschlossenen Pfad antreibbar sind;
- erste parallele querlaufende Elemente (5), die zwischen und an den ersten Bändern (3), Gurten oder Ketten angebracht sind;
- zweite parallele querlaufende Elemente (6), die zwischen und an den zweiten Bändern (4), Gurten oder Ketten angebracht sind;
- flexible Stützelemente (7), die jeweils an einem ersten querlaufenden Element (5) und an einem zweiten querlaufenden Element (6) angebracht sind;
wobei die ersten Bänder (3), Gurte oder Ketten um die zweiten Bänder (4), Gurte oder Ketten in einem Abstand angeordnet sind, der, bei Verwendung, entlang der Pfade zwischen einem minimalen Abstand (d) und einem maximalen Abstand (D) variiert und in einem aufsteigenden Teil (32) der Pfade einem Trägerabstand (C) entspricht, so dass die flexiblen Stützelemente (7) die Körbe (7) zum Aufnehmen der Wurzelfrüchte bilden.

13. Wurzelfruchterntemaschine (1) nach einem der vorhergehenden Ansprüche, **dadurch gekennzeichnet, dass** der Höhenförderer (2) als ein Ringhöhenförderer (2) ausgebildet ist und dass ein Zuführförderer (31) zum Zuführen der Wurzelfrüchte hin zu dem Ringhöhenförderer (2) durch den Ringhöhenförderer (2) installiert ist.

## Revendications

1. Récolteuse de culture racine (1), comprenant un élévateur (2) pour lever des cultures racines et décharger ces cultures racines à l'intérieur de la récolteuse de culture racine (1), l'élévateur (2) comprenant :
- une première paire de bandes (3), courroies ou chaînes de transport sans fin, agencées en parallèle, qui sont entraînables par-dessus un premier trajet fermé ;
- des paniers (7), au moins dans une partie ascendante (32) du trajet fermé, agencés entre les premières bandes (3), courroies ou chaînes, pour recevoir les cultures racines ; et
- au moins deux rouleaux de déflexion (15), sur lesquels les premières bandes (5), courroies, chaînes sont agencées, qui définissent ladite partie ascendante (32) ou qui définissent une partie descendante (33) du trajet fermé ;
**caractérisée en ce que** l'élévateur (2) comprend un bâti fixe (12) et un bâti mobile (13) auxquels lesdits rouleaux de déflexion (15) sont fixés de façon rotative, lequel bâti mobile (13) est mobile dans une direction horizontale (X) par rapport au bâti fixe (12), de telle sorte que l'élévateur (2) soit déformable entre
- une position de travail ;
- et une position de déplacement dans laquelle, dans au moins la partie ascendante (32) ou la partie descendante (33) du trajet, les premières bandes (3), courroies ou chaînes sont mues dans la direction horizontale (X) par rapport à la position de travail, de telle sorte que la largeur de l'élévateur (2) soit réduite.

2. Récolteuse de culture racine (1) selon la revendication 1, **caractérisée en ce que**, dans la position de travail, les paniers (7) sont dépliés pour recevoir des cultures racines, et que, dans la position de déplacement, les paniers (7) sont repliés, réduisant la largeur de ceux-ci.

3. Récolteuse de culture racine (1) selon l'une quelconque des revendications précédentes, **caractérisée en ce que** l'élévateur (2) comprend des limiteurs latéraux (8), qui sont agencés au moins au niveau de la partie ascendante (32) de chaque côté des paniers (7) pour empêcher des cultures racines de tomber des paniers (7) par l'intermédiaire de ces côtés, et que, dans la position de déplacement, les premières bandes (3), courroies, chaînes ou analogues sont mues dans la partie ascendante (32) et les limiteurs latéraux (8) sont réduits de façon correspondante dans ladite direction horizontale (X).

4. Récolteuse de culture racine (1) selon la revendication 3, **caractérisée en ce que** les limiteurs latéraux (8) sont conçus sous forme de parois latérales.

5. Récolteuse de culture racine (1) selon la revendication 4, **caractérisée en ce que**, de chaque côté des paniers (7), les limiteurs latéraux (8) comprennent au moins une première partie de paroi latérale (9) et une seconde partie de paroi latérale (10), laquelle seconde partie de paroi latérale (10) est mobile dans ladite direction horizontale (X) par rapport à la première partie de paroi latérale (9), de telle sorte que, dans la position de déplacement, ces parties de paroi latérale (9, 10) se chevauchent essentiellement.

6. Récolteuse de culture racine (1) selon la revendication 5, **caractérisée en ce que** la seconde partie de paroi latérale (10) est fixée au bâti mobile (13).

7. Récolteuse de culture racine (1) selon l'une quelconque des revendications précédentes, **caractérisée en ce que** l'élévateur (2) comprend des moyens d'entraînement de bâti (17) pour entraîner le mouvement du bâti mobile (13).

8. Récolteuse de culture racine (1) selon l'une quelconque des revendications précédentes, **caractérisée en ce que** le bâti mobile (13) est suspendu au bâti fixe (12) au moyen de deux bras articulés (18, 22).

9. Récolteuse de culture racine (1) selon la revendication 8, **caractérisée en ce que** les moyens d'entraînement de bâti (17) comprennent un vérin hydraulique (17) et qu'un premier bras articulé (18) des deux bras articulés (18, 22) est, à sa première extrémité, relié de façon articulée à une première extrémité du vérin hydraulique (17) dans un premier point d'articulation (21), est, à sa seconde extrémité, relié de façon articulée au bâti mobile (13) dans un deuxième point d'articulation (20) et est, entre sa première extrémité et sa seconde extrémité, relié de façon articulée au bâti fixe (12) dans un troisième point d'articulation (19), qu'un second bras articulé (22) des deux bras articulés (18, 22) est, à sa première extrémité, relié de façon articulée au bâti fixe (12) dans un quatrième point d'articulation (23), et est, à sa seconde extrémité, relié de façon articulée au bâti mobile (13) dans un cinquième point d'articulation (24), et que le vérin hydraulique (17) est, à sa seconde extrémité, relié de façon articulée au bâti mobile (13) dans un sixième point d'articulation (38).

10. Récolteuse de culture racine (1) selon l'une quelconque des revendications précédentes, **caractérisée en ce que** l'élévateur (2) comprend des moyens d'entraînement d'élévateur pour entraîner les bandes (3), courroies ou chaînes, **en ce que** l'élévateur (2) comprend un premier capteur (30) pour détecter la position de travail de l'élévateur (2), **en ce que** le premier capteur (30) est lié aux moyens d'entraînement d'élévateur, et **en ce que** les moyens d'entraînement d'élévateur sont configurés pour que les bandes (3, 4), courroies ou chaînes soient seulement entraînables par les moyens d'entraînement d'élévateur lorsque le capteur (30) détecte la position de travail.

11. Récolteuse de culture racine (1) selon la revendication 10, **caractérisée en ce que** l'élévateur (2) comprend un second capteur (40) pour détecter la charge de cultures racines sur l'élévateur (2), et que le second capteur (40) est lié aux moyens d'entraînement d'élévateur, et **en ce que** les moyens d'entraînement d'élévateur sont configurés pour entraîner les bandes (3, 4), courroies ou chaînes avec une vitesse d'entraînement ajustable, et pour ajuster cette vitesse d'entraînement en fonction de la charge mesurée avec le second capteur (40).

12. Récolteuse de culture racine (1) selon l'une des revendications précédentes, **caractérisée en ce que** l'élévateur (2) comprend en outre :
- une seconde paire de bandes (4), courroies ou chaînes de transport sans fin, agencées en parallèle, qui sont entraînables par-dessus un second trajet fermé ;
- des premiers éléments transversaux parallèles (5) reliés entre les, et aux, premières bandes (3), courroies ou chaînes ;
- des seconds éléments transversaux parallèles (6) reliés entre les, et aux, secondes bandes (4), courroies ou chaînes ;
- des éléments de support flexibles (7), chacun relié à un premier élément transversal (5) et à un second élément transversal (6) ;
les premières bandes (3), courroies ou chaînes étant agencées autour des secondes bandes (4), courroies ou chaînes à une distance, qui, durant l'utilisation, varie, le long des trajets, entre une distance minimum (d) et une distance maximum (D), et, dans une partie ascendante (32) des trajets, est égale à une distance de transport (C), de telle sorte que les éléments de support flexibles (7) forment lesdits paniers (7) pour recevoir les cultures racines.

13. Récolteuse de culture racine (1) selon l'une des revendications précédentes, **caractérisée en ce que** l'élévateur (2) est configuré sous forme d'élévateur annulaire (2) et qu'un convoyeur d'alimentation (31), pour effectuer l'alimentation en les cultures racines vers l'élévateur annulaire (2), est installé à travers l'élévateur annulaire (2).
